# EUROPÄISCHE PATENTSCHRIFT

(11) **EP 0 744 540 B1**
(45) Veröffentlichungstag und Bekanntmachung des Hinweises auf die Patenterteilung: **10.02.1999**
(21) Anmeldenummer: 95107780.9
(22) Anmeldetag: 22.05.1995
(51) Int. Cl.: F02B 27/02

(54) **Absperreinrichtung für einzelne oder mehrere Saugrohre einer Saugrohranlage für eine Mehrzylinder-Brennkraftmaschine**
Blocking device for one or more inlet tubes of an inlet system for a multi-cylinder engine
Dispositif obturateur pour un au plusieurs tuyeaux d'admission d'un système d'admission pour un moteur à combustion interne à plusieurs cylindres

(43) Veröffentlichungstag der Anmeldung: 27.11.1996
(73) Patentinhaber: Dr.Ing.h.c. F. Porsche Aktiengesellschaft, 70435 Stuttgart (DE); REGIE NATIONALE DES USINES RENAULT S.A., 92109 Boulogne Billancourt Cédex (FR)
(72) Erfinder: Krebs, Winfried, D-71638 Ludwigsburg (DE)

(56) Entgegenhaltungen:
- EP-A- 0 382 596
- EP-A- 0 389 834
- FR-A- 2 260 694
- PATENT ABSTRACTS OF JAPAN vol. 10 no. 267 (M-516) ,11.September 1986 & JP-A-61 089927 (MITSUBISHI) 8.Mai 1986,

## Beschreibung

Die Erfindung bezieht sich auf eine Absperreinrichtung für einzelne oder mehrere Saugrohre einer Saugrohranlage für eine Mehrzylinder-Brennkraftmaschine nach dem Oberbegriff des Anspruchs 1.

Aus der EP-0 389 834 B1 ist eine Saugrohranlage für eine Mehrzylinder-Brennkraftmaschine bekannt, bei der eine Absperrung der einzelnen Saugrohre über eine schwenkbare Absperrklappe in den Saugrohren erfolgt.

Aufgabe der Erfindung ist es, eine Absperreinrichtung für eine Saugrohranlage einer Mehrzylinder-Brennkraftmaschine zu schaffen, die kompakt ausgebildet ist, einen geringen Bauaufwand bedingt und eine einfache und störungsunanfällige Betätigung zum Schließen und Öffnen der einzelnen Saugrohre gewährleistet. Außerdem soll die Montage in einfacher und schneller Weise durchführbar sein.

Diese Aufgabe wird erfindungsgemäß durch die kennzeichnenden Merkmale des Anspruchs 1 gelöst. Weitere vorteilhafte Merkmale beinhalten die Unteransprüche.

Die Absperreinrichtung besteht im wesentlichen aus einem über eine Verstelleinrichtung verschiebbaren Flachschieber, der zwischen einem Saugrohrgehäuse und einem Einspritzdüsenträgergehäuse angeordnet ist. Der Flachschieber besteht aus einem Kunststoff und ist mit Langlöchern versehen, die bei einem Verschieben des Flachschiebers jeweils das kürzere Saugrohr schließen oder aber beide Saugrohre, d.h. das längere und das kürzere Saugrohr freigeben.

Die Montage ist sehr einfach, da der Flachschieber in einer Ausnehmung des Düsenträgergehäuses einlegbar ist. Durch das draufgesetzte Saugrohrgehäuse ist der Schieber optimal beidseitig geführt.

Das Düsenträgergehäuse weist endseitig der Vertiefung für den Flachschieber in einem vertieften Aufnahmeraum die Verstelleinrichtung auf. Diese ist unterhalb des Flachschiebers vorgesehen und im Gehäuse gelagert. Die Einrichtung besteht im wesentlichen aus einem verschwenkbar im Gehäuse über eine Buchse gehaltenen Zapfen, der mit einem Aufnahmeteil und einem Kulissenstein vormontierbar ist. Mit den Zapfen ist über eine Stange eine Druckdose zur Verstellung des Flachschiebers über den Kulissenstein entsprechend den Betriebszuständen verbunden.

Der Kulissenstein ist am Aufnahmeteil schwenkbeweglich gehalten, so daß bei einer Drehung des Zapfens der Kulissenstein sich im Querschlitz des Flachschiebers hin und her bewegen kann und somit der Flachschieber verstellbar zu den Mündungsöffnungen der Saugrohre ist.

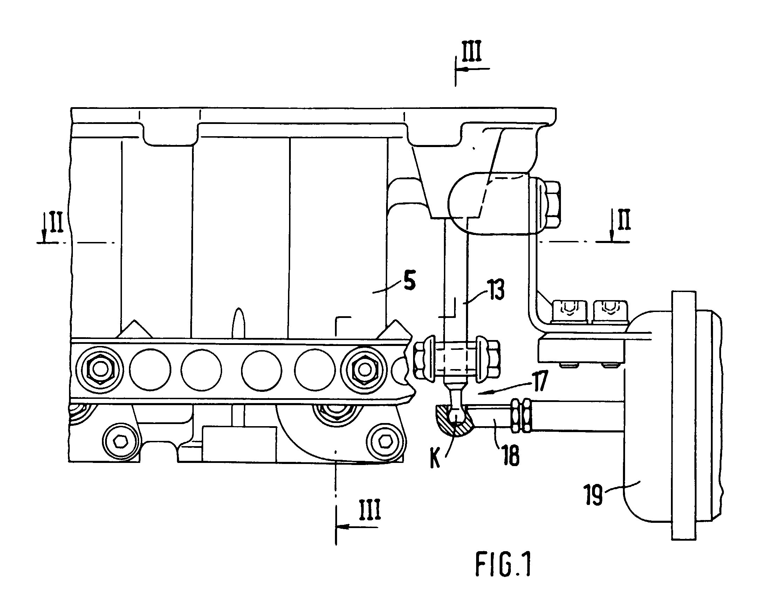

Ein Ausführungsbeispiel der Erfindung ist in der Zeichnung dargestellt und wird im folgenden näher beschrieben.
Es zeigen
- Fig. 1: eine Ansicht auf ein Einspritzdüsenträgergehäuse mit Verstelleinrichtung,

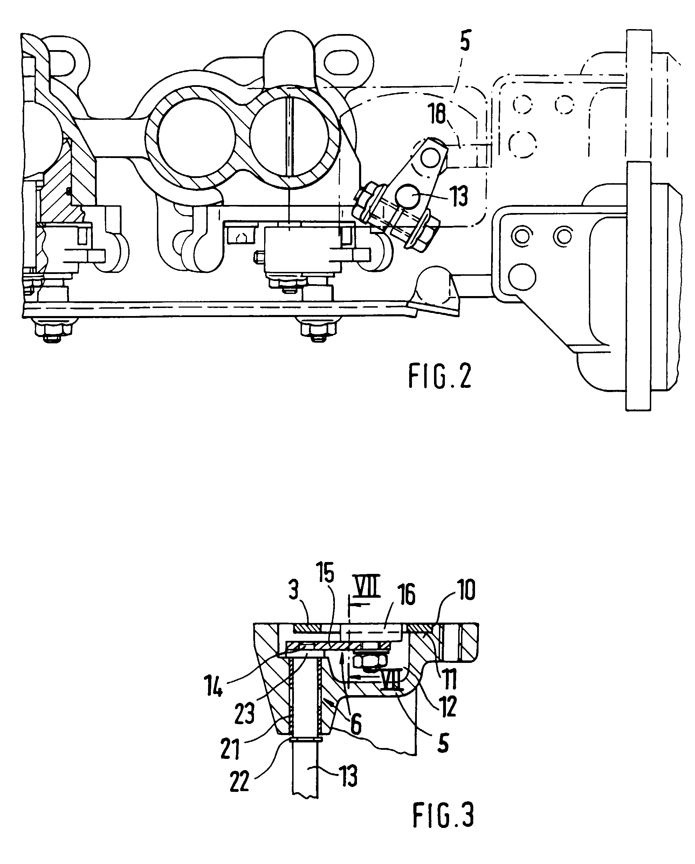

- Fig. 2: einen Schnitt nach der Linie II-II der Fig. 1,
- Fig. 3: einen Schnitt nach der Linie III-III der Fig. 1,

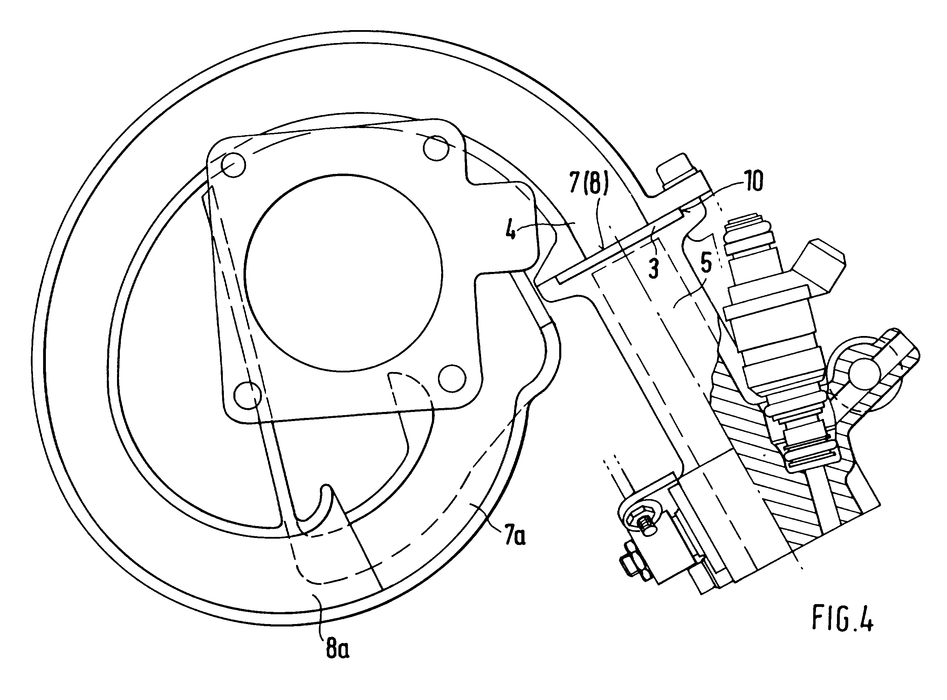

- Fig. 4: eine Ansicht auf die Saugrohranlage mit Düsenträgergehäuse,
- Fig. 5: eine Ansicht auf das Düsenträgergehäuse,
- Fig. 6: eine Ansicht auf den Flachschieber,
- Fig. 7: einen Schnitt nach der Linie VII-VII der Fig. 3.

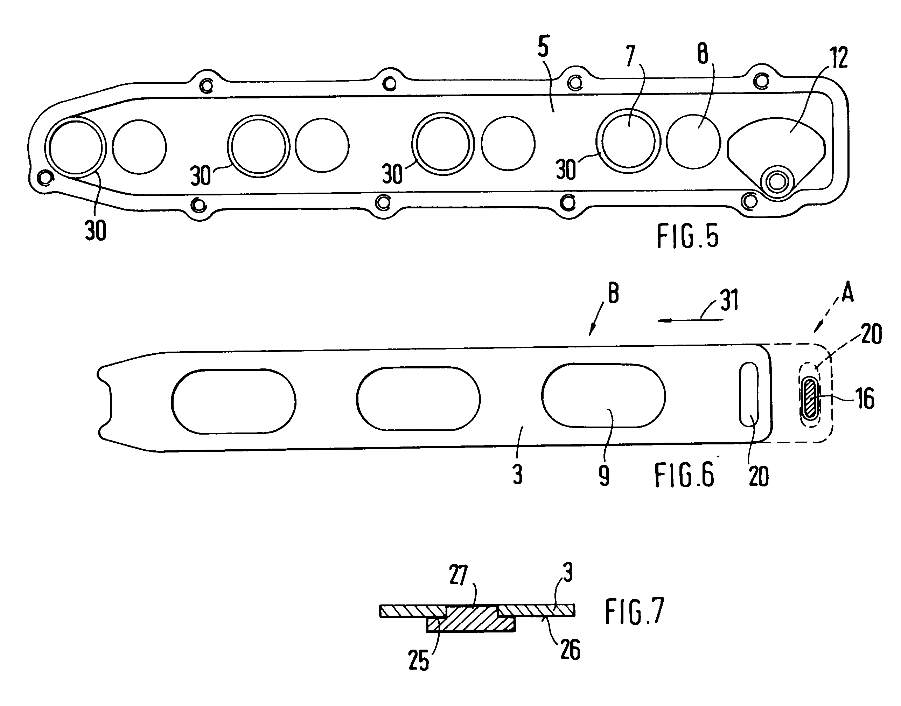

Eine Absperreinrichtung 1 für eine Saugrohranlage besteht im wesentlichen aus einem Flachschieber 3, welcher zwischen einem Saugrohrgehäuse 4 und einem Einspritzdüsenträgergehäuse 5 angeordnet ist. Über eine Verstelleinrichtung 6 wird der Flachschieber 3 in zwei Betriebsstellungen A und B verschoben, was in Fig. 6 näher dargestellt ist.

In der Betriebsstellung A sind beide Mündungsöffnungen 7, 8 des längeren und des kürzeren Saugrohres 7a und 8a geöffnet, da ein Langloch 9 des Flachschiebers 3 diese freigibt. Bei einem Verschieben in Pfeirichtung 31 in die Betriebsstellung B ist die Mündungsöffnung 8 des kürzeren Saugrohres 8a geschlossen und nur die Mündungsöffnung 7 des längeren Saugrohres 7a ist geöffnet. Im Gehäuse 5 oder im Gehäuse 4 sind für die längeren Rohre herausragende Stutzten 30 gebildet, die einen Anschlag für den Flachschieber 3 darstellen.

Der Flachschieber 3 ist in einer als Längsführung 10 ausgebildeten Vertiefung des Düsenträgergehäuses 5 angeordnet und auf längsverlaufenden Randstegen 11 mit seiner Rückseite geführt. An einem Ende der Vertiefung 10 ist ein Aufnahmraum 12 für die Verstelleinrichtung 6 vorgesehen.

Diese Verstelleinrichtung 6 umfaßt einen im Gehäuse 5 gelagerten Zapfen 13, der an seinem einen freien Ende 14 ein Aufnahmeteil 15 mit einem Kulissenstein 16 aufweist. Das abgekehrte Ende 17 ist über ein Kugelzapfengelenk mit einer Stange 18 und diese ist mit einer Druckdose 19 verbunden.

Der Kulissenstein 16 ragt in einen Querschlitz 20 des Flachschiebers 3 und bei einem Verdrehen des Zapfens 13 verschwenkt das fest verbundene Aufnahmteil 15 und der schwenkbeweglich befestigte Kulissenstein 16 und dieser kann sich bei Verstellung des Flachschiebers 3 im Querschlitz 20 hin und her bewegen, entsprechend der Drehung des Zapfens 13.

Die Bauteile der Verstelleinrichtung 6 sind vormontierbar und insgesamt vom Aufnahmeraum 12 in das Gehäuse 5 einsetzbar. Mittels einer Lagerbuchse 21 ist der Zapfen 13 in einer Bohrung des Gehäuses 5 gelagert. Ein Sicherungsring 22 hält den Zapfen 13 in Lage, wobei am oberen freien Ende 14 ein Kopf 23 zur axialen Abstützung vorgesehen ist.

Der Kulissenstein 16 kann zur besseren Verschiebung seitliche Führungsbahnen 25 aufweisen, die die Unterfläche 26 des Flachschiebers 3 im Bereich des Querschlitzes 20 untergreifen und nur ein nach oben vorstehender Steg 27 in den Schlitz 20 formschlüssig hineinragt, wie in der vergrößerten Schnittdarstellung gemäß Fig. 7 zu erkennen ist.

## Patentansprüche

1. Absperreinrichtung für einzelne oder mehrere Saugrohre einer Saugrohranlage für eine Mehrzylinder-Brennkraftmaschine mit mindestens zwei Einlaßventilen pro Zylinder und mit längeren und kürzeren Einzelsaugrohren, die jeweils zu einem Einlaßventil führen und von denen die kürzeren Einzelsaugrohre zu- und abschaltbar sind, dadurch gekennzeichnet, daß die Absperreinrichtung (1) einen zwischen einem Saugrohrgehäuse (4) und einem Einspritzdüsenträgergehäuse (5) angeordneten Flachschieber (3) umfaßt, der in einer Längsführung (10) des Düsenträgergehäuses (5) über eine Verstelleinrichtung (6) in eine alle Saugrohre (7a, 8a) öffnende Betriebsstellung (A) und in eine jeweils die kürzeren Saugrohre (8a) schließende weitere Betriebsstellung (B) verschiebbar ist.

2. Absperreinrichtung nach Anspruch 1, dadurch gekennzeichnet, daß das Düsenträgergehäuse (5) als Längsführung (10) für den Flachschieber (3) eine Vertiefung mit sich längs des Flachschiebers (3) erstreckenden Randstegen (11) aufweist und an einem Ende des Gehäuses (5) ein Aufnahmeraum (12) für die Verstelleinrichtung (6) vorgesehen ist, die unterhalb des Flachschiebers (3) im Gehäuse (5) gelagert ist.

3. Absperreinrichtung nach den Ansprüchen 1 oder 2, dadurch gekennzeichnet, daß die Verstelleinrichtung (6) einen verschwenkbaren Zapfen (13) mit einem sich wegerstreckenden Aufnahmeteil (15) für einen Kulissenstein (16) umfaßt, der in einem Querschlitz (20) des Flachschiebers (3) geführt ist.

4. Absperreinrichtung nach den Ansprüchen 1, 2 oder 3, dadurch gekennzeichnet, daß der verschwenkbare Zapfen (13) am unteren, dem Kulissenstein (16) abgekehrten Ende (17) mit einem Kugelzapfen (K) verbunden ist, der mit einer Druckdose (19) zum Verstellen des Flachschiebers (3) verbunden ist.

5. Absperreinrichtung nach Anspruch 1 oder einem der vorhergehenden Ansprüche, dadurch gekennzeichnet, daß das Aufnahmeteil (15) fest mit dem Zapfen (13) verbunden ist, wobei der Kulissenstein (16) schwenkbeweglich am Aufnahmeteil (15) lagert.

6. Absperreinrichtung nach Anspruch 1 oder einem der vorhergehenden Ansprüche, dadurch gekennzeichnet, daß der Kulissenstein (16) einen als Führung im Querschlitz (20) des Flachschiebers (3) ausgeführten vorstehenden Steg (27) mit seitlichen Führungsbahnen (25) aufweist, welche der Unterfläche (26) des Flachschiebers (3) zugerichtet sind.

## Claims

1. A blocking device for individual intake pipes or a plurality of intake pipes of an intake-pipe unit for a multiple-cylinder internal-combustion engine with at least two inlet valves *per* cylinder and with longer and shorter individual intake pipes, which each lead to one respective inlet valve and by which the shorter individual intake pipes can be turned on and off, **characterized in that** the blocking device (1) comprises a flat slide (3) which is arranged between an intake-pipe housing (4) and an injection-nozzle support housing (5) and which is displaceable in a longitudinal guide (10) of the nozzle support housing (5) by way of a displacement device (6) into an operating position (**A**) opening all the intake pipes (7a, 8a) and into a further operating position (**B**) closing the shorter intake pipes (8a) in each case.

2. A blocking device according to Claim 1, **characterized in that** the nozzle support housing (5) has a depression with edge webs (11) extending along the flat slide (3) as a longitudinal guide (10) for the flat slide (3), and at one end of the housing (5) a receiving space (12) is provided for the displacement device (6) which is mounted below the flat slide (3).

3. A blocking device according to Claim 1 or 2, **characterized in that** the displacement device (6) comprises a pivotable pin (13) with a receiving part (15) projecting away for a slide block (16) which is guided in a transverse slot (20) in the flat slide (3).

4. A blocking device according to Claim 1, 2 or 3, **characterized in that** the pivotable pin (13) is connected at the lower end (17) remote from the slide block (16) to a ball-end pin (**K**) connected to a pressure box (19) for displacing the flat slide (3).

5. A blocking device according to Claim 1 or one of the preceding Claims, **characterized in that** the receiving part (15) is rigidly connected to the pin (13), wherein the slide block (16) is supported on the receiving part (15) in a pivotably movable manner.

6. A blocking device according to Claim 1 or one of the preceding Claims, **characterized in that** the slide block (16) has a projecting web (27) - constructed as a guide in the transverse slot (20) of the flat slide (3) - with lateral guide paths (25) directed towards the underside (26) of the flat slide (3).

## Revendications

1. Dispositif d'obturation pour un ou plusieurs tubes d'admission d'un système de tubes d'admission pour un moteur à combustion interne à plusieurs cylindres comportant au moins deux soupapes d'admission par cylindre et des tubes d'admission individuels plus longs et d'autres plus courts, qui mènent chacun à une soupape d'admission et dont les tubes d'admission individuels plus courts peuvent être raccordés et séparés de celle-ci, caractérisé en ce que le dispositif d'obturation (1) comprend un tiroir plat (3) disposé entre un boîtier de tube d'admission (4) et un boîtier support de buse d'injection (5), qui peut coulisser dans un guidage longitudinal (10) du boîtier support de buse (5), par l'intermédiaire d'un dispositif de réglage (6), dans une position de service (A) ouvrant tous les tubes d'admission (7a, Sa) et dans une autre position de service (B) fermant les tubes d'admission (8a) plus courts.

2. Dispositif d'obturation selon la revendication 1, caractérisé en ce que le boîtier support de buse (5) présente comme guidage longitudinal (10) pour le tiroir plat (3), un renfoncement avec des nervures de bordure (11) s'étendant le long du tiroir plat (3) et à une extrémité du boîtier (5) est prévu un volume formant logement (12) pour le dispositif de réglage (6), qui est monté au-dessous du tiroir plat (3) dans le boîtier (5).

3. Dispositif d'obturation selon les revendications 1 ou 2, caractérisé en ce que le dispositif de réglage (6) comprend une tige (13) pivotante avec une partie de logement (15) s'éloignant pour un coulisseau (16), qui est guidé dans une fente transversale (20) du tiroir plat (3).

4. Dispositif d'obturation selon les revendications 1, 2 ou 3, caractérisé en ce que la tige pivotante (13) est reliée, à l'extrémité (17) inférieure, tournée à l'opposé du coulisseau (16), avec un pivot sphérique (K), qui est relié à une boîte de pression (19) pour le réglage du tiroir plat (3).

5. Dispositif d'obturation selon la revendication 1 ou l'une des revendications précédentes, caractérisé en ce que la partie de logement (15) est solidaire de la tige (13), le coulisseau (16) étant monté mobile à pivotement sur la partie de logement (15).

6. Dispositif d'obturation selon la revendication 1 ou l'une des revendications précédentes, caractérisé en ce que le coulisseau (16) présente une nervure (27) saillante, réalisée en tant que guidage dans la fente transversale (20) du tiroir plat (3), avec des voies de guidage latérales (25), qui sont orientées vers la face inférieure (26) du tiroir plat (3).
